(19) 

Europäisches Patentamt

European Patent Office

Office européen des brevets

(11) **EP 3 191 735 B1**

(12) **EUROPEAN PATENT SPECIFICATION**

(45) Date of publication and mention of the grant of the patent:
**13.11.2019 Bulletin 2019/46**

(21) Application number: **14841358.6**

(22) Date of filing: **04.12.2014**

(51) Int Cl.:
*F16C 17/02* (2006.01)     *F16C 32/06* (2006.01)
*G05D 19/02* (2006.01)     *F16F 15/00* (2006.01)

(86) International application number:
**PCT/CZ2014/000147**

(87) International publication number:
**WO 2016/070856 (12.05.2016 Gazette 2016/19)**

(54) **A METHOD OF ACTIVE CONTROL OF SLIDE BEARING VIBRATIONS USING THE PIEZO ACTUATOR AND A DEVICE FOR PERFORMING THEREOF**

METHODE UND VORRICHTUNG FÜR DIE AKTIVE STEUERUNG DER VIBRATION VON GLEITLAGERN MIT PIEZO PFLASTERN

PROCÉDÉ ET DISPOSITIF POUR LE CONTRÔLE ACTIF DES VIBRATIONS DES ROULEMENTS AVEC DES ACTIONNEURS PIÉZOÉLECTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2014 CZ 20140744**

(43) Date of publication of application:
**19.07.2017 Bulletin 2017/29**

(73) Proprietor: **Vysoká Skola Bánská - Technická Univerzita Ostrava**
**708 33 Ostrava Poruba (CZ)**

(72) Inventors:
• **TUMA, Jiri**
**74266 Stamberk (CZ)**
• **SIMEK, Jiri**
**14300 Praha 4 (CZ)**

• **MAHDAL, Miroslav**
**68754 Bánov (CZ)**
• **SKUTA, Jaromir**
**73932 Vratimov (CZ)**
• **SURÁNEK, Pavel**
**74801 Hlucin (CZ)**
• **WAGNEROVÁ, Renata**
**70030 Ostrava (CZ)**
• **STARY, Vladimir**
**74767 Cavisov (CZ)**

(74) Representative: **Kendereski, Dusan**
**Koliste 13a**
**602 00 Brno (CZ)**

(56) References cited:
**CZ-B6- 304 672     JP-A- 2000 205 251**
**US-A- 5 221 146     US-A- 5 397 183**
**US-A1- 2003 118 257**

## Description

Field of the Invention

The invention relates to a method of active control of radial slide bearing vibrations, the slide bearing consisting of a housing and a movable bushing, whose movement is controlled by piezo actuators arranged between the movable bushing and mounts, and a device for performing thereof.

Background of the Invention

The instability of rotors arranged in hydrodynamic bearings causing excessive vibrations after exceeding the speed threshold is a known phenomenon. Its characteristic feature is a sub-harmonic oscillation frequency, which either depends on the shaft oscillation frequency and is known as "oilwhirl" or has a constant frequency usually equal to the first separate system frequency and is referred to as "oilwhip". The "oilwhirl" type of oscillation frequency is from 0.42 to 0.48 multiple of the rotor oscillation frequency. The borderline speed for the emergence of such instability of a slide bearing with a cylindrical bushing depends on the radial clearance and the viscosity of lubrication oil. Relative radial clearance within precision bearings is within 3 per mill and oil viscosity adjusts to its usual temperature around 40 °C. For example, a slide bearing for a shaft with the diameter of 30 mm and with radial clearance of 40 $\mu$m, for which a special oil for high speed spindle grinders is used, has the limiting rotation speed around 2000 per minute. The rotor instability is solved passively by adjusting the inner profile of the bushing of the bearing. Design adjustments are supposed to create a geometry consisting of several sliding surfaces, of which the centre of curvature is shifted with respect to the centre of the bearing, thus creating a certain preload. The bearing profile is e.g. a of a lemon or elliptical (with two sliding surfaces) shape or optionally multi-lobbed, when the bearing has two or more sliding surfaces. The best bearing properties in terms of stability are those of bearings with a floating bushing and bearings with tilting pads, which are of course manufacture-demanding.

There was an attempt in the world to actively control a slide bearing using actuators with giant magnetostrictive materials at the City University of Hongkong. The aim was to reduce the vibrations by the influence of external forces. Laboratory tests with bearings, which are far from the practice applicable for slide bearings, were carried out without oil lubrication. A control system with a simple controller was tested and published at the inventor's workplace.

The Czechoslovak patent CS 260929 B6 discloses a guide bearing for doors with vertical movement consisting of a plunger, which is placed in the glider. Insider the plunger there is a spring that functions as energy storage and secures the independence of the bearing.

The guide bearing may be used for doors in production halls, hay-barns and other agricultural buildings. The guide bearing moves in the slide created in a U profile. The guide bearing remains in the glider on which the plunger is arranged. The plunger is basically a hollow cylinder with a through hole. The plunger is guided in a plate with through holes welded to a frame. A frame with a metal sheet or wooden panels creates the door. The connection between the door and the glider is secured with a bolt which is sunk into the glider with its head, leads through the plunger and ends above the opening in the frame. The bolt is fixed to the plunger with a nut and to the frame with a locking nut. The spring placed in the plunger cavity functions as energy storage for applying of transverse movement of the glider. During the movement of the door the bearing moves towards the slide. This solution refers to a mechanical solution and is suitable for entirely different type of bearings compared to those in the present invention.

The Czech patent CZ 304672 B6 discloses a method and a device for active control of hydrodynamic slide bearings with a movable bushing which extends the operating rotation speed using electronic feedback mediated by piezo actuators that are controlled by a position controller. Their desired values are an output of a two-parameter controller with an input to the position of the controller and with an input to the position of a shaft in relation to the housing of the bearing. The bushing is moved by two piezo actuators placed on the sides of the shaft. The first piezo actuator is arranged in a plane perpendicular to the shaft axis. The second piezo actuator is also arranged in a plane perpendicular to the shaft axis and is rotated by 90° in relation to the first piezo actuator. The movement of the bushing in relation to the housing is provided by two resilient members. It is possible to determine the position of the shaft in relation to the housing in two mutually perpendicular directions using two proximity sensors placed on the sides of the shaft. The first proximity sensor is arranged in a plane perpendicular to the shaft axis. The second proximity sensor is also arranged in a plane perpendicular to the shaft axis and is rotated by 90° in relation to the first sensor. Measured errors are the differences between desired shaft positions and measured shaft positions in two directions. These positions are compared with the actual position, which is determined using the proximity sensors. The measured errors are inputs of the two-parameter controller.

The European patent application EP 2241770 A1 discloses a device with slide bearings, which is able to reduce the mechanical stress concentration. This bearing device is equipped with a bushing which is supported by a housing mounted on a body of a rotary machine provided with a rotating shaft and with pads, which are arranged so as to circumferentially surround the rotating shaft, wherein the contact surface between the outer circumference of the bushing and the inner circumference of the housing extends along the axial direction of the rotating shaft and forms a convex curved surface. The distance between the inner circumference of the bushing and the outer circumference of the pad gradually increases from the centre towards the ends along the axial direction. The device focuses on a design solution and does not concern the control, nor the use of piezo actuators.

The US patent application US 4643592 A discloses a mechanical vibration limiting device of rotary machines. This device comprises one or more position detectors on the rotor shaft, a computer with a memory and a control algorithm for manipulation with signals coming from the detectors, an electronic controller for manipulating hydraulic valves, movable pads, slide bearings, auxiliary pumping systems, movable bearing pads, and actuators functioning under feedback control of the computer, which controls and regulates the optimal rotation speed of the device. The device is supposed to reduce undesirable vibrations; however, the active means are hydraulic, i.e. different means from those of the present invention.

The US patent application US 5221146 A discloses a bearing of a geared shaft, comprising a bearing, a piezoelectric element sensor, a piezoelectric actuator and a driving means. The general structure of the bearing includes a casing (housing), an inner ring (race) linked to a rotatable shaft and an outer ring (race) linked to the casing, implying a rolling bearing according to the figures. The piezoelectric element sensor is contacted on one end with the outer ring of the bearing and on the other end with the casing, lacking any direct contact with the rotating shaft. Consequently, such an arrangement of the sensor detects the vibrations of the rotating shaft with respect to the casing indirectly through the outer ring of the bearing, which might cause inaccuracies in measurements as there might be local deformations of the outer ring included. The piezoelectric actuator is contacted on one end with the outer ring of the bearing in its expansion-and-constriction direction and on the other end with the casing, lacking any direct contact with the inner ring of the bearing. The force generated by the actuator counteracting on the detected vibration therefore disadvantageously acts upon the outer ring of the bearing, not on the inner ring and might merely cause a local deformation of the outer ring without transmitting the force onto the rotating shaft. The nature of the vibrations itself is influenced by the geared rotating shaft, whereby the sensors detect and the actuators counteract mainly vibrations generated due to a mesh of gears. Lastly, the band-pass tracking filter is connected in series with the phase advance/retard control circuit, where this series circuit serves to calculate a meshing frequency according to a number of revolutions of the geared shaft per time and assume the calculated frequency as a centre frequency.

The US patent application US 5397183 A discloses a tilt pad bearing having a structure which changes shape in a controlled manner in response to a control signal. The bearing comprises a piezoceramic smart material, a plurality of tilt pads and a backing housing. A controller is also provided for developing a control signal in response to feedback information. The piezoceramic smart material changes the geometry of the tilt pads as opposed to the present invention which describes a bushing of a slide bearing with a non-changing geometry.

The US patent application US 2003118257 A1 discloses a foil journal bearing using a plurality of piezoelectric actuators. At an interior surface of a bearing housing there is a plurality of foils or a top foil for supporting a rotating shaft. The piezoelectric actuators are embedded in an inside portion of the bearing housing while coming into contact with and supporting the foil(s) to increase stiffness and damping coefficient of the bearing at critical speeds of the rotating shaft. In order to reduce vibrations of the rotating shaft, the piezoelectric actuators change the geometry of the foils at the interior surface as opposed to the present invention, which describes a bushing of a slide bearing with a non-changing geometry.

The Japanese patent application JP 2000205251 A discloses a bearing mechanism in which a plurality of bearing pads are arranged around a rotary shaft at a certain spacing, capable of damping shaft vibrations. Each pad is fitted with a piezoelectric element, and when a voltage is impressed, the piezoelectric element elongates and deforms the pad. With deformation of pads, the gap distribution formed by the pads in the area to a rotary shaft varies and the vibrations are damped. The piezoelectric elements change the geometry of the bearing pads as opposed to the present invention which describes a bushing of a slide bearing with a non-changing geometry.

The invention aims to propose a system of active control of slide bearings using piezo actuators and to reduce the instability caused by the oil film, wherein to achieve stability a band-pass filter is used, which is tuned to the frequency of the "whirl" type vibration mode.

Summary of the Invention

The invention achieves its aim by a method of active control of slide bearing vibrations using piezo actuators, wherein said slide bearing comprises a movable bushing and a housing. The actual measured positions of a shaft in relation to the housing of the slide bearing are determined in two mutually perpendicular directions by a first proximity sensor of a position $y_1$ and a second proximity sensor of a position $y_2$, and these actual positions $y_1$ and $y_2$ are subtracted from a first desired position $y_{1,SP}$ and a second desired position $y_{2,SP}$, wherein the result are measured errors $e_1$ and $e_2$. These measured errors $e_1$ and $e_2$ represent an input for a two-parameter position controller as well as for a first band-pass filter and a second band-pass filter. The two-parameter position controller is connected in parallel to the first band-pass filter and the second band-pass filter. The centre frequency $f_W$ of the band-pass filters is derived from the rotation frequency $f_R$ of the shaft and it is measured with a shaft rotation sensor. The outputs of the two-parameter position controller and the first band-pass filter and the second band-pass filter are summed up and implemented as a first and a second manipulated variable $u_1$ and $u_2$ to a first DC voltage amplifier and to a second DC voltage amplifier which are connected to a first and a second piezo actuator. The first and the second piezo actuator operate in two mutually perpendicular directions on the movable bushing, inside of which the shaft is pivotally arranged.

A device for performing the above-mentioned method comprises the shaft arranged in the movable bushing, which is equipped with a support in the form of resilient members supporting a movable bushing and with which are further coupled the first and the second piezo actuator arranged in the housing of the slide bearing in a plane perpendicular to the shaft axis and rotated by 90° in relation to each other. It is assumed that the piezo actuator itself is not prestressed and prestressing is created by the resilient member. The device further comprises the first proximity sensor of the position $y_1$ and the second proximity sensor of the position $y_2$, which are oriented parallel to the position of the first and the second piezo actuator, and the rotation sensor of the shaft. The first proximity sensor of the position $y_1$ is connected through a difference block to the input of the two-parameter position controller as well as to the first band-pass filter, which are both further connected through a sum block to the input of the DC voltage amplifier which is then connected with the first piezo actuator. Analogically, the second proximity sensor of the position $y_2$ is connected through a difference block to the input of the two-parameter position controller as well as to the second band-pass filter, which are both further connected through a sum block to the input of the second DC voltage amplifier which is then connected to the second piezo actuator. The rotation sensor of the shaft is connected to the input of a proportional block whose output is connected to parametrical inputs of the first and the second band-pass filter.

The present invention is characterized in that its feedback is supplemented with band-pass filters whose centre frequency is tuned to the vibration mode frequency which causes the "oilwhirl" type of vibrations. The centre frequency $f_W$ of the band-pass of the filter is a constant multiple of the rotation frequency $f_R$ of the bearing spindle. The band-pass filter is a part of the feedback, which consists of zooming probes represented by the proximity sensors of the positions $y_1$ and $y_2$ of the shaft oriented in two mutually perpendicular positions parallel to the piezo actuators. The measured errors $e_1$ and $e_2$ of the shaft position as a difference between the desired $y_{1,SP}$, $y_{2,sp}$ and the actual measured positions $y_1$, $y_2$ of the shaft in the mentioned directions, are implemented parallel to the two-parameter position controller and to two band-pass filters, which are tuned to the frequency $f_W$ of "oilwhirl" vibrations type. Each of the outputs of the two-parameter position controller sums up with the respective output of the band-pass filter. Two manipulated variables $u_1$ and $u_2$ are converted into two voltage variables, which are connected to the piezo actuators after amplification. The piezo actuators control the movement of the bushing in two mutually perpendicular directions. The movable bushing of the bearing is sealed with O-rings. A balance of the resistance forces against the deformation of seal rings and further of the deformation force of the layered piezo actuators and of the force caused by voltage of the both piezo actuators determines the balanced position of the bushing of the slide bearing. A change in the position using an oil film transfers to the position of the rotating shaft.

The advantage of the proposed solution is the possibility to keep the shaft in a given position with deviations smaller than the radial bearing clearance.

By providing electronic negative feedback to the originally mechanical system, the influence of the inner quadrature strength, which functions as a positive feedback in the direction tangential to the circumference of the bearing and causing the mentioned instability of "oilwhirl" type, is compensated.

The instability occurs if the positive feedback amplification overcomes the natural damping negative feedback by the influence of rigidity and damping of the oil film.

The effect of the active control of slide bearings with a position controller and a stabilizing controller including the band-pass filter is that the rotation speed limit of the shaft creating instability increases from 2000 per minute to 12 000 per minute. The band-pass filter in the feedback defines the transfer of the transmission noise of the proximity sensors to the feedback circuit.

## Brief Description of the Drawings

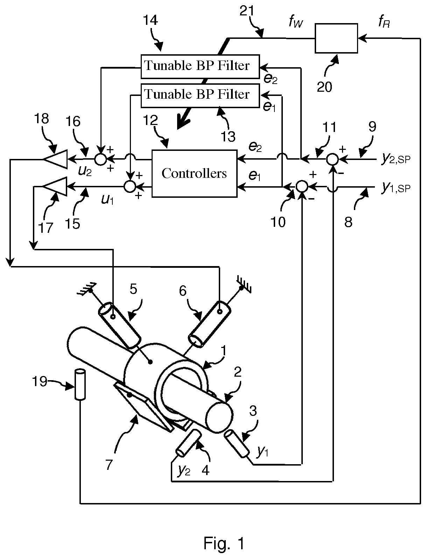

The invention is schematically illustrated in the drawings, where Fig. 1 illustrates a block diagram of the device for active control of slide bearing vibrations using piezo actuators with a flexibly arranged cylindrical bushing of a slide bearing.

## Description of Preferred Embodiments

The invention deals with the positioning of a journal of a bearing and extending of operating range of speed by suppressing self-excited oscillations due to a destabilizing effect of the oil film in a gap between the shaft surface and the inner surface of a bearing bushing which is allowed when a mechanical system of a slide bearing is supplemented with electronic feedback mediating the influence of the shaft position on the position of the movable bushing.

The method of active control of slide bearing vibrations using piezo actuators, the function of which is illustrated by a block diagram in Fig. 1, is designed in such a way that the actual positions $y_1$ and $y_2$ of the shaft

**2** are measured in two mutually perpendicular directions using the first and the second proximity sensor **3** and **4** in relation to the housing of the bearing, which are subtracted from the first desired position $y_{1,SP}$ and the second desired position $y_{2,SP}$, wherein the results are the first and the second measured error $e_1$ and $e_2$. These measured error $e_1$ and $e_2$ are an input for the two-parameter position controller **12** and two tunable band-pass filters of the second order whose centre frequency $f_W$ is derived from the rotation frequency $f_R$ of the shaft **2** which is measured by the rotation sensor **19**. The outputs of the two-parameter position controller **12** and both tunable band-pass filters **13** and **14** are summed up in sum blocks as the first and the second manipulated variable $u_1$ and $u_2$ and implemented as voltage to two voltage amplifiers **17** and **18,** which are connected to the first and the second piezo actuator **5** and **6** operating in two mutually perpendicular directions on the movable bushing **1** of the slide bearing, inside which said shaft **2** is arranged .

The device for implementation of active control of slide bearing vibrations using piezo actuators with a cylindrical, flexibly positioned bushing is illustrated in Fig. 1. This device embodiment comprises the shaft **2** arranged in the movable bushing **1**, which is provided with a support in the form of resilient members **7**. The movable bushing **1** is further connected with the first and the second piezo actuator **5** and **6** arranged in the housing of the bearing in a plane perpendicular to the axis of the shaft **2**, wherein they are rotated by 90° in relation to each other. The device further comprises the first proximity sensor **3** of the position $y_1$ and the second proximity sensor of the position $y_2$, which are oriented parallel to the position of the first and the second piezo actuators **5** and **6** and the rotation sensor **19** of the shaft **2**. The first proximity sensor **4** of the actual position $y_1$ is connected through a difference block to the input of the two-parameter position controller **12** as well as to the first band-pass filter **13**, which are both further connected through a sum block to the input of the first DC voltage amplifier **17** which is then connected to the piezo actuator **5**. The second proximity sensor **4** of the actual position $y_2$ is connected through a difference block to the input of the two-parameter position controller **12** as well as to the second band-pass filter **14**, which are both further connected through a sum block to the input of the second DC voltage amplifier **18**, which is then connected to the second piezo actuator **5**. The rotation sensor **19** of the shaft **2** is connected to the input of the proportional block **20**, whose output is connected to the parametric input **21** of the first and the second band-pass filter **13** and **14**. The parametric input **21** of the band-pass filters **13** and **14** controls their centre frequency. The feedback is further supplemented with the first and the second band-pass filter **13** and **14**, whose centre frequency is tuned to the vibration mode frequency, which causes the "oilwirl" type of vibrations. The centre frequency $f_W$ of the band-pass filter is a constant multiple of rotation frequency $f_R$ of the bearing journal. As is apparent from Fig. 1, the first and the second band-pass filter **13** and **14** are part of the feedback which consists of the first and the second proximity sensor **3** and **4** of the actual position $y_1$ and $y_2$ of the shaft **2**, which are oriented in two mutually perpendicular directions and parallel with the first and the second piezo actuators **5** and **6**. The first measured error $e_1/10$ of the shaft **2** as a final difference between the desired position $y_{1,SP}$ and the actual measured position $y_1$ of the shaft **2** and also the second measured error $e_2/11$ between the desired position $y_{2,SP}$ and the actual measured position $y_2$ of the shaft **2** in mentioned directions are implemented in parallel to the two-parameter position controller **12** and to the first and the second band-pass filter **13** and **14** respectively, which are tuned to the $f_W$ frequency of the "oilwhilr" vibration type. Each of the two outputs of the two-parameter position controller **12** is summed up with the respective output of the first and the second band-pass filter **13** and **14**. Two manipulated variables $u_1/15$ and $u_2/16$ are transformed into voltages $U_1$ and $U_2$ which are, after amplification, delivered to the first and the second piezo actuator **5** and **6.** The first and the second piezo actuator **5** and **6** control the movement of the bushing **1** in two mutually perpendicular directions. The movable bushing **1** is sealed with O-rings. The balance of the resistance force against the deformation of O-rings and further of the deformation force of the first and the second piezo actuator **5** and **6** and of the force caused by voltage of the first and the second piezo actuator **5** and **6** determine the balanced position of the bushing of the slide bearing. Change of the bearing bushing **1** position using oil film transfers to position of the rotating shaft **2**.

Active control is carried out so that the first and the second piezo actuator **5** and **6**, which are arranged in the housing of the bearing in a plane perpendicular to the axis of the shaft **2**, operate on the movable bushing **1,** wherein the first and the second proximity sensor **3** and **4** are oriented parallel to the position of the first and the second piezo actuator **5** and **6**.

Active control is allowed by the movable bushing **1**, preferably of a cylindrical shape, in which rotates the shaft **2**. The position of the shaft **2** is measured in relation to the device frame or to the fixed housing of the bearing using the first and the second proximity sensor **3** and **4** of the positions $y_1$, $y_2$. The first and the second piezo actuator **5** and **6** move the bushing **1** of the slide bearing. The bushing **1** is supported against the fixed housing of the bearing by resilient members **7** and the above-mentioned flexible rubber O-rings. The resilient member **7** functions to preload the layered first or second piezo actuator **5** and **6** in case it is not internally mechanically preloaded. The first desired position $y_{1,SP}/8$ of the shaft **2** and the second desired position $y_{2,SP}/9$ of the shaft **2** in both directions perpendicular to the axis of the shaft **2** will be compared to the actual position measured by the first or the second proximity sensor **3** and **4** of the position $y_1$, $y_2$ of the shaft **2** in the control system. The result are the measured error $e_1/10$ and measured error

$e_2/11$, which are the difference between the first desired $y_{1,SP}$ /8 of the shaft 2 and the second desired position $y_{2,SP}$/9 of the shaft 2 and the actual measured positions $y_1$, $y_2$, which are inputs of the two-parameter position controller 12. Both measured errors $e_1/10$ and $e_2/11$ are implemented to the first and the second band-pass filter 13 and 14, outputs of which are summed up with the outputs of the two-parameter position controller 12, wherein the resulted manipulated variables $u_1/15$ and $u_2/16$ for both directions of the movement of movable bushing 1 are implemented to the first and the second DC voltage amplifier 17 and 18, and the resulting voltages on the outputs control the first and the second piezo actuator 5 and 6, which closes the position control loop with negative feedback. The frequency of bearing vibration mode identified as $f_W$, to which the centre frequency of the band-pass of the band-pass filters 13 and 14 is tuned, is derived from the rotation frequency of the shaft 2 identified as $f_R$. The shaft 2 rotation frequency is measured by the shaft rotation sensor 19. The frequency of the vibration mode $f_W$ is an output of the proportional block 20. The output of the block 20 is a parametric input 21 of the both band-pass filters 13 and 14. The rotation sensor 19 is of optional type, wherein its output is a variable equal to the instantaneous rotation frequency in Hertz.

The two-parameter position controller 12 may consist of two conventional PID type controllers. The supplementation of cross-coupling turns this controller into a two-parameter controller. Active control of slide bearing vibrations shows positive effect even for a proportional controller. The tunable band-pass filter of the second order, of which the centre frequency is set on the frequency of the "oilwhirl" vibration type $f_W$ in Hertz or respectively $\omega/\omega_W$ in radians per second, has a frequency transfer

$$G_{BP}(j\omega) = K \frac{j2\xi_{BP}\,\omega/\omega_W}{(j\omega/\omega_W)^2 + j2\xi_{BP}\,\omega/\omega_W + 1}$$

where

$\omega = 2\pi f$ is an angular frequency
K is a filter gain
and $\xi_{BP}$ parameter means damping with a similar meaning as for the oscillation segment.

The filter gain for an angular frequency $\omega_W$ is $G_{BP}(j\omega_W) = K$ and for other frequencies it is lower than this maximum filter gain in the absolute value, wherein for $\omega = 0$ and $\omega \to \infty$ there is a zero gain. The bandwidth of the passband frequency range is dependent on the $\xi_{BP}$ parameter, which determines the filter damping ratio, for example 0.7.

- Circuits of active control of slide bearing vibrations may be designed as analog circuits, which process analog signals. Another option is a circuit design using a microprocessor. An analog band-pass filter may be designed only for static bearing shaft rotations. A tunable filter for rotations, which considerably vary over time as for acceleration and deceleration of the machine, may be operated only numerically with a microprocessor programme. A DC voltage amplifier may be constructed of discrete components or it can be an integrated circuit.

- A two-parameter position controller may be designed as analog and numerical controller. Implementation of such PID type controller is well known.

Industrial Applicability

The slide bearing with active control can be used for machines with high rotation speed and shaft load. It has a potential to be used where roller bearings do not have an adequate lifetime for straining the outer race by the centrifugal force of a rolling element. A potential application would be in bearing of high-speed machining spindles, centrifuges, flywheels for storing kinematic energy and gyroscopes.

List of Reference Numbers

[0029]

1      - movable bushing of a slide bearing

2      - shaft

3      - first proximity sensor of the position $y_1$

4      - second proximity sensor of the position $y_2$

5      - first piezo actuator

6      - second piezo actuator

7      - resilient member

8      - first desired position $y_{1,SP}$ of the shaft

9      - second desired position $y_{2,SP}$ of the shaft

10     - first measured error $e_1$

11     - second measured error $e_2$

12     - two-parameter position controller

13     - first band-pass filter

14     - second band-pass filter

15     - first manipulated variable $u_1$

16     - second manipulated variable $u_2$

17      - first DC voltage amplifier

18      - second DC voltage amplifier

19      - shaft rotation sensor

20      - proportional block

21      - parametrical input of the band-pass filters

**Claims**

1.  A method of active control of slide bearing vibrations using piezo actuators, wherein said slide bearing comprises a movable bushing and a housing , **characterized in that** the actual position of a shaft (**2**) in relation to the housing of the slide bearing is measured in two mutually perpendicular directions using a first proximity sensor (**3**) of a position $y_1$ and a second proximity sensor (**4**) of a position $y_2$ and these actual positions $y_1$ and $y_2$ are subtracted from a first desired position ($y_{1,SP}$/**8**) and from a second desired position ($y_{2,SP}$/**9**), wherein the result are measured errors ($e_1$/**10**) and ($e_2$/**11**), which are an input for a two-parameter position controller (**12**) as well as for a first band-pass filter (**13**) and a second band-pass filter (**14**), of which the centre frequency $f_W$ is derived from the rotation frequency $f_R$ of the shaft (**2**) measured by a rotation sensor (**19**) of the shaft (**2**), wherein the two-parameter position controller (**12**) is connected in parallel to the first band-pass filter (**13**) and the second band-pass filter (**14**), wherein the outputs of the two-parameter position controller (**12**) and the first band-pass filter (**13**) and the second band-pass filter (**14**) are summed up and implemented as a first and a second manipulated variable (**$u_1$/15, $u_2$/16**) to a first DC voltage amplifier (**17**) and a second DC voltage amplifier (**18**), which are connected to a first and a second piezo actuator (5, 6), wherein the first and the second piezo actuator (5, 6) operate in two mutually perpendicular directions on the movable bushing (**1**) inside of which the shaft (**2**) is pivotally arranged.

2.  A device for performing the method according to claim 1, comprising the shaft (**2**) arranged in the movable bushing (**1**), which is equipped with a support in the form of resilient members (**7**) supporting the movable bushing (**1**) and with which are further coupled the first and the second piezo actuator (5, 6) arranged in the housing of the slide bearing in a plane perpendicular to the axis of the shaft (**2**) and rotated by 90° in relation to each other, **characterized in that** it further comprises the first proximity sensor (**3**) of the position $y_1$ and the second proximity sensor (**4**) of the position $y_2$, which are oriented parallel to the position of the first and the second piezo actuator (5, 6), and the rotation sensor (**19**) of the shaft (**2**), wherein the first proximity sensor (**3**) of the position $y_1$ is connected through a difference block to the input of the two-parameter position controller (**12**) as well as to the first band-pass filter (**13**), which are both further connected through a sum block to the input of the DC voltage amplifier (**17**) which is then connected with the first piezo actuator (**5**), wherein the second proximity sensor (**4**) of the position $y_2$ is connected through a difference block to the input of the two-parameter position controller (**12**) as well as to the second band-pass filter (**14**), which are both further connected through a sum block to the input of the second DC voltage amplifier (**18**) which is then connected to the second piezo actuator (**6**), wherein the rotation sensor (**19**) of the shaft (**2**) is connected to the input of a proportional block (**20**) whose output is connected to parametrical inputs (**21**) of the first and the second band-pass filter (13, 14) .

**Patentansprüche**

1.  Ein Verfahren zur aktiven Steuerung von Gleitlagerschwingungen mit Piezoaktoren, wobei das Gleitlager eine bewegliche Buchse und ein Gehäuse umfasst, **dadurch gekennzeichnet, dass** die Ist-Position einer Welle (**2**) relativ zum Gehäuse des Gleitlagers in zwei zueinander senkrechten Richtungen mittels eines ersten Näherungssensors (**3**) einer Position $y_1$ und eines zweiten Näherungssensors (**4**) einer Position $y_2$ gemessen wird und diese Ist-Positionen $y_1$ und $y_2$ von einer ersten Soll-Position ($y_{1,SP}$/**8**) und von einer zweiten Soll-Position ($y_{2,SP}$/**9**) abgezogen werden, wobei es sich bei dem Ergebnis um Messfehler ($e_1$/**10**) und (**$e_2$/11**) handelt, die ein Eingang für einen Zwei-Parameter-Positionsregler (**12**) sind, sowie für ein erstes Bandpassfilter (**13**) und ein zweites Bandpassfilter (**14**), dessen Mittenfrequenz $f_W$ von der von einem Rotationssensor (**19**) der Welle (**2**) gemessenen Rotationsfrequenz $f_R$ der Welle (**2**) abgeleitet ist, wobei die Zwei-Parameter-Positionsregler (**12**) parallel zu dem ersten Bandpassfilter (**13**) und dem zweiten Bandpassfilter (**14**) geschaltet ist, wobei die Ausgänge des Zwei-Parameter-Positionsreglers (**12**) und des ersten Bandpassfilters (**13**) und des zweiten Bandpassfilters (**14**) aufsummiert und als erste und zweite Stellgrösse (**$u_1$/15, $u_2$/16**) einem ersten Gleichspannungsverstärker (**17**) und einem zweiten Gleichspannungsverstärker (**18**) realisiert werden, die mit einem ersten und einem zweiten Piezoaktor (**5, 6**) verbunden sind, wobei der erste und der zweite Piezoaktor (**5, 6**) in zwei zueinander senkrechten Richtungen auf der beweglichen Buchse (**1**) arbeiten, innerhalb derer die Welle (**2**) schwenkbar angeordnet ist.

**2.** Eine Vorrichtung zur Durchführung des Verfahrens nach Anspruch 1, umfassend die Welle (**2**), die in der beweglichen Buchse (**1**) angeordnet ist, wobei die bewebliche Buchse (**1**) mit einem Träger in Form von elastischen Elementen (**7**) ausgestattet ist, die die bewegliche Buchse (**1**) tragen und mit denen der erste und der zweite Piezoaktor (**5**, **6**) ferner in einer Ebene senkrecht zur Achse der Welle (**2**) im Gehäuse des Gleitlagers angeordnet sind und um 90° zueinander gedreht sind, **dadurch gekennzeichnet, dass** sie ferner den ersten Näherungssensor (**3**) der Position $y_1$ und den zweiten Näherungssensor (**4**) der Position $y_2$ umfassen, die parallel zu der Position des ersten und des zweiten Piezoaktors (**5**, **6**) ausgerichtet sind, und den Rotationssensor (**19**) der Welle (**2**), wobei der erste Näherungssensor (**3**) der Position $y_1$ über einen Differenzblock mit dem Eingang der Zwei-Parameter-Positionsreglers (**12**) sowie mit dem ersten Bandpassfilter (**13**) verbunden ist, die beide weiter über einen Summenblock mit dem Eingang des Gleichspannungsverstärkers (**17**) verbunden sind, der dann mit dem ersten Piezoaktor (**5**) verbunden ist, wobei der zweite Näherungssensor (**4**) der Position $y_2$ über einen Differenzblock mit dem Eingang des Zwei-Parameter-Positionsreglers (**12**) sowie mit dem zweiten Bandpassfilter (**14**) verbunden ist, die beide weiter über einen Summenblock mit dem Eingang des zweiten Gleichspannungsverstärkers (**18**) verbunden sind, der dann mit dem zweiten Piezoaktor (**6**) verbunden ist, wobei der Rotationssensor (**19**) der Welle (**2**) mit dem Eingang eines Proportionalblocks (**20**) verbunden ist, dessen Ausgang mit parametrischen Eingängen (**21**) des ersten und des zweiten Bandpassfilters (**13**, **14**) verbunden ist.

**Revendications**

**1.** Un Procédé de commande active de vibrations de palier coulissant à l'aide d'actionneurs piézoélectriques, où ledit palier coulissant comprend une douille mobile et un boîtier, **caractérisé en ce que** la position réelle d'un arbre (**2**) par rapport au boîtier du palier coulissant est mesurée dans deux directions mutuellement perpendiculaires à l'aide d'un premier capteur de proximité (**3**) d'une position $y_1$ et d'un second capteur de proximité (**4**) d'une position $y_2$ et ces positions réelles $y_1$ et $y_2$ sont soustraites d'une première position souhaitée ($y_{1,SP}$/**8**) et d'une seconde position souhaitée ($y_{2,SP}$/**9**), où le résultat sont des erreurs de mesure ($e_1$/**10**) et ($e_2$/**11**), qui sont une entrée pour un contrôleur de position à deux paramètres (**12**) ainsi que pour un premier filtre passe-bande (**13**) et un second filtre passe-bande (**14**), dont la fréquence centrale $f_W$ est dérivée de la fréquence de rotation $f_R$ de l'arbre (**2**) mesurée par un capteur de rotation (**19**) de l'arbre (**2**), où le contrôleur de position à deux paramètres (**12**) est reliée en parallèle au premier filtre passe-bande (**13**) et au second filtre passe-bande (**14**), où les sorties du contrôleur de position à deux paramètres (**12**) et du premier filtre passe-bande (**13**) et du second filtre passe-bande (**14**) sont additionnés et mis en oeuvre sous la forme d'une première et d'une seconde variable manipulée ($u_1$/**15**, $u_2$/**16**) à un premier amplificateur de courant continu (**17**) et un second amplificateur de courant continu (**18**), qui sont reliés à un premier et un second actionneur piézoélectrique (**5**, **6**), où le premier et le second actionneur piézoélectrique (**5**, **6**) fonctionnent dans deux directions mutuellement perpendiculaires sur la douille mobile (**1**) à l'intérieur de laquelle l'arbre (**2**) est disposé de manière pivotante.

**2.** Un dispositif pour la mise en oeuvre du procédé selon la revendication 1, comprenant l'arbre (**2**) disposé dans la douille mobile (**1**), qui est équipée d'un support sous la forme d'éléments élastiques (**7**) supportant la douille mobile (**1**) et avec lesquels sont en outre couplés les premier et second actionneurs piézoélectriques (**5**, **6**) disposés dans le boîtier du palier coulissant dans un plan perpendiculaire à l'axe de l'arbre (**2**) et tournés de 90° l'un par rapport à l'autre, **caractérisé en ce qu'**il comprend en outre le premier capteur de proximité (**3**) de la position $y_1$ et le second capteur de proximité (**4**) de la position $y_2$ qui sont orientés parallèlement à la position du premier et du second actionneur piézoélectrique (**5**, **6**), et le capteur de rotation (**19**) de l'arbre (**2**), où le premier capteur de proximité (**3**) de la position $y_1$ est relié par l'intermédiaire d'un bloc de différence à l'entrée du contrôleur de position à deux paramètres (**12**) ainsi qu'au premier filtre passe-bande (**13**), qui sont tous deux reliés en outre par l'intermédiaire d'un bloc de somme à l'entrée de l'amplificateur de courant continu (**17**) qui est ensuite relié au premier actionneur piézoélectrique (**5**), où le second capteur de proximité (**4**) de la position $y_2$ est relié par l'intermédiaire d'un bloc de différence à l'entrée du contrôleur de position à deux paramètres (**12**) ainsi qu'au second filtre passe-bande (**14**), qui sont tous deux reliés en outre par l'intermédiaire d'un bloc de somme à l'entrée du second amplificateur de courant continu (**18**) qui est ensuite relié au second actionneur piézoélectrique (**6**), où le capteur de rotation (**19**) de l'arbre (**2**) est relié à l'entrée d'un bloc proportionnel (**20**) dont la sortie est reliée à des entrées paramétriques (**21**) du premier et du second filtre passe-bande (**13**, **14**).

Fig. 1

**REFERENCES CITED IN THE DESCRIPTION**

**Patent documents cited in the description**

- CS 260929 B6
- CZ 304672 B6
- EP 2241770 A1
- US 4643592 A
- US 5221146 A
- US 5397183 A
- US 2003118257 A1
- JP 2000205251 A